# EUROPÄISCHE PATENTSCHRIFT

(11) **EP 2 350 149 B1**
(45) Veröffentlichungstag und Bekanntmachung des Hinweises auf die Patenterteilung: **02.01.2013**
(21) Anmeldenummer: 09783678.7
(22) Anmeldetag: 02.10.2009
(51) Int. Cl.: C08F 220/18, C08F 220/32, C08L 3/02

(54) **COPOLYMERE MIT LANGKETTIGEN ACRYLATEN**
COPOLYMERS HAVING LONG-CHAIN ACRYLATES
COPOLYMÈRES COMPRENANT DES ACRYLATES À LONGUE CHAÎNE

(30) Priorität: 14.10.2008 EP 08166596
(43) Veröffentlichungstag der Anmeldung: 03.08.2011
(73) Patentinhaber: BASF SE, 67056 Ludwigshafen (DE)
(72) Erfinder: YAMAMOTO, Motonori, 68199 Mannheim (DE); LICHT, Ulrike, 68309 Mannheim (DE); SCHERZER, Dietrich, 67433 Neustadt (DE)
(86) Internationale Anmeldenummer: PCT/EP2009/062810
(87) Internationale Veröffentlichungsnummer: WO 2010/043505

(56) Entgegenhaltungen:
- WO-A1-2005/017034
- WO-A2-2008/073703

## Beschreibung

Die vorliegende Erfindung betrifft Copolymere erhältlich durch radikalische Polymerisation von
i) 10 bis 90 Gew.-%, bezogen auf das Gesamtgewicht der Komponenten i bis iv, mindestens eines Monomers ausgewählt aus der Gruppe bestehend aus einem C₈-C₃₀-Alkyl(meth)acrylat, C₈-C₃₀ Vinylester, C₈-C₃₀ Vinylether, C₈-C₃₀ Olefin und Triglycerid aus ungesättigten C₈-C₃₀ Carbonsäuren;
ii) 0,5 bis 70 Gew.-%, bezogen auf das Gesamtgewicht der Komponenten i bis iv, eines doppelbindungshaltigen Monomers mit mindestens einer Epoxid-, Isocyanat-, Carbodiimid-, Silan-, ß-Dicarbonyl-, Oxazolin, oder Anhydridgruppe;
iii) 0 bis 75 Gew.-%, bezogen auf das Gesamtgewicht der Komponenten i bis iv, eines oder mehrerer Monomere ausgewählt aus der Gruppe bestehend aus Vinylaromat, C₁-C₇-Alkyl(meth)acrylat, ethylenisch ungesättigte Acetophenon- oder Benzophenonderivat, C₁-C₇Vinylester, C₁-C₇ Vinylether, ethylenisch ungesättigtes Nitril, ethylenisch ungesättigtes Amid, Vinylhalogenid, C₂-C₇ Olefin, cyclisches Laktam und Mischungen dieser Monomeren; und
iv) 0 bis 10 Gew.-% , bezogen auf das Gesamtgewicht der Komponenten i bis iv, eines radikalisch polymerisierbaren Monomers mit Carbonsäure, Sulfonsäure oder Phosphonsäuregruppen oder deren Salze.

Weiterhin betrifft die Erfindung Polymermischungen enthaltend diese Copolymere sowie die Verwendung der Copolymere als Kettenverlängerer, Verträglichkeitsvermittler, und/oder als Hydrolysestabilisator, zur Herstellung von Papier und Karton, zur Oberflächenveredlung in der Papier-, Textil- und Lederindustrie und in Klebstoffen.

Copolymere enthaltend Glycidylmethacrylate und kurzkettige Acrylate - wie beispielsweise n-Butylacrylat - sind aus EP-A 1316 597 bekannt. Diese Copolymere eignen sich beispielsweise als Klebstoffe.

Weiterhin ist aus Stärke 1998 Vol. 50, No. 11-12, Seite 484 bis 486 bekannt, dass langkettige Fettsäuren mit der Helixstruktur der Stärke in Wechselwirkung treten und zur einer besseren Verträglichkeit der Stärke in einer Polymermatrix führen.

In US 6984694 ist beschrieben, Polykondensaten - wie beispielsweise Polyestern - acrylische Copolymere als Kettenverlängerer, die durch ihren hohen Gehalt an reaktiven Comonomeren z.B. Glycidylmethacrylat an den Polyester binden, zuzusetzen. Die Comonomere enthalten jedoch keine langkettigen Acrylate. Ein Zusatz solcher Verbindungen zu Polymermischungen aus Polyestern und Stärke kann - wie in der EP- 1 656 423 gezeigt - die Reißfestigkeit dieser Systeme steigern, jedoch reicht die Verbesserung der Eigenschaften für verschiedene Extrusionsanwendungen noch nicht aus.

Es wurde gefunden, dass die erfindungsgemäßen Comonomere enthaltend i) ein langkettiges doppelbindungshaltiges Monomer und ii) ein reaktives Monomer die Eigenschaften von Polymermischungen insbesondere von Stärkemischungen drastisch verbessern.

Insbesondere haben sich die folgenden Ausführungsformen der Copolymere A), B) und C) als vorteilhaft erwiesen.
A) Copolymere erhältlich durch radikalische Polymerisation von
   i) 10 bis 90 Gew.-%, bezogen auf das Gesamtgewicht der Komponenten i bis iii, mindestens eines C₈-C₃₀ Alkyl(meth)acrylates, C₈-C₃₀ Vinylesters oder C₈-C₃₀Vinylethers, insbesondere bevorzugt ist ein C₁₀-C₂₀ Alkyl(meth)acrylat;
   ii) 0,5 bis 60 Gew.-%, bezogen auf das Gesamtgewicht der Komponenten i bis iv, eines reaktiven Monomers ausgewählt aus der Gruppe bestehend aus Glycidylacrylat, Glycidylmethacrylat, Maleinsäureanhydrid (MSA), Allylglycidylether, Glycidylethacrylat, Dimethyl-meta-isopropenyl-benzyl-isocyanat und Itaconsäureanhydrid, insbesondere bevorzugt ist ein Glycidylmethacrylat;
   iii) 0 bis 75 Gew.-%, bezogen auf das Gesamtgewicht der Komponenten i bis iv, eines Vinylaromaten, C₁-C₇-Alkyl(meth)acrylates oder Mischungen dieser Monomeren, insbesondere bevorzugt ist Styrol oder n-Butylacrylat;
   iv) 0 bis 10 Gew.-% eines radikalisch polymerisierbaren Monomers mit Carbonsäure, Sulfonsäure oder Phosphonsäuregruppen oder deren Salze.
B) Copolymere erhältlich durch radikalische Polymerisation von
   i) 30 bis 90 Gew.-%, bezogen auf das Gesamtgewicht der Komponenten i bis iii, mindestens eines C₈-C₃₀ Alkyl(meth)acrylates, C₈-C₃₀Vinylesters oder C₈-C₃₀Vinylethers, insbesondere bevorzugt ist ein C₁₀-C₂₀ Alkyl(meth)acrylat;
   ii) 0,5 bis 30 Gew.-%, bezogen auf das Gesamtgewicht der Komponenten i bis iii, eines reaktiven Monomers ausgewählt aus der Gruppe bestehend aus Glycidylacrylat, Glycidylmethacrylat und MSA, insbesondere bevorzugt ist ein Glycidylmethacrylat; und
   iii) 0 bis 25 Gew.-%, bezogen auf das Gesamtgewicht der Komponenten i bis iii, eines Styrols, oder C₁-C₇ Alkyl(meth)acrylates, insbesondere bevorzugt ist Styrol oder n-Butylacrylat.C) Copolymere erhältlich durch radikalische Polymerisation von

   i) 10 bis 80 Gew.-%, bezogen auf das Gesamtgewicht der Komponenten i bis iii, mindestens eines C₈-C₃₀ Alkyl(meth)acrylats, C₈-C₃₀Vinylesters oder C₈-C₃₀ Vinylethers, insbesondere bevorzugt ist ein C₁₀-C₂₀ Alkyl(meth)acrylat;
   ii) 10 bis 60 Gew.-%, bezogen auf das Gesamtgewicht der Komponenten i bis iii, eines reaktiven Monomers ausgewählt aus der Gruppe bestehend aus Glycidylacrylat, Glycidylmethacrylat und MSA, insbesondere bevorzugt ist ein Glycidylmethacrylat; und
   iii) 0 bis 25 Gew.-%, bezogen auf das Gesamtgewicht der Komponenten i bis iii, eines Styrols oder C₁-C₇ Alkyl(meth)acrylates, insbesondere bevorzugt ist Styrol oder n-Butylacrylat.

Die erfindungsgemäßen Copolymere lassen sich analog zu den in der EP 1316597und EP 655465 beschriebenen Verfahren herstellen.

Die erfindungsgemäßen Monomere i) können C₈-C₃₀-Alkyl(meth)acrylate, C₈-C₃₀ Vinylester, C₈-C₃₀ Vinylether, C₈-C₃₀ Olefine oder Glyceride (d.h. Glycerinester) aus ungesättigten C₈-C₃₀ Carbonsäuren sein. Bevorzugt sind C₁₀-C₂₀ Vinylester, C₁₀-C₂₀ Vinylether und besonders bevorzugt C₁₀-C₂₀-Alkyl(meth)acrylate.

Unter C₈-C₃₀-Alkyl(meth)acrylate, C₈-C₃₀ Vinylester, C₈-C₃₀ Vinylether, C₈-C₃₀ Olefine oder Glyceride (d.h. Glycerinester) aus ungesättigten C₈-C₃₀ Carbonsäuren sind insbesondere zu verstehen: (Meth)acrylester langkettiger Säuren wie Laurylacrylat, Hexadecylacrylat Stearylacrylat, Behenylacrylat; Vinylester und Vinylether wie Laurinsäurevinylester,Hexadecansäurevinylester, Stearinsäurevinylester Behensäurevinylester; Laurylvinylether Hexadecylvinylether, Stearylvinylether und Behenylvinylether. Bei den Glyceriden sind die Glycerinester ungesättigter Carbonsäuren zu verstehen, wie Linol- und Linolensäure, Ölsäure, Rizinolsäure, Icosensäure, Eicosapentaensäure, bevorzugt mehrfach ungesättigte Fettsäuren. Besonders bevorzugte Monomere sind (Meth)-acrylate wie Laurylacrylat, Hexadecylacrylat, Stearylacrylat und Behenylacrylat.

Die Komponente i) (z.B Laurylacrylat) wird in der Regel in 10 bis 90 Gew.-%, bevorzugt 20 - 80 Gew.-%, besonders bevorzugt 30 - 60 Gew.-% - bezogen auf das Gesamtgewicht der Komponenten i bis iv - eingesetzt.

Die reaktiven Monomere ii) sind in der Regel doppelbindungshaltige Monomere mitmindestens einer Epoxid-, Isocyanat-, Carbodiimid-, Silan-, ß-Dicarbonyl-, Oxazolin- oder Anhydridgruppe. Hierunter sind insbesondere Glycidylacrylat, Glycidylmethacrylat, MSA, Allylglycidylether, Glycidylethacrylat, Acryloylisocyanat, Dimethyl-meta-isopropenyl-benzyl-isocyanate und Itaconsäureanhydrid, Diacetonacrylamid, Vinyltrialkoxysilan, Methacryloxypropyltrimethoxysilan, Vinyl-oxazolin, Isopropenyl-oxazolin und zu verstehen. Bevorzugte Monomere sind Glycidylacrylat, Glycidylmethacrylat, MSA, Allylglycidylether, Glycidylethacrylat, Dimethyl-meta-isopropenyl-benzyl-isocyanate und Itaconsäureanhydrid. Insbesondere bevorzugt sind Glycidylacrylat, Glycidylmethacrylat und MSA.

Die Monomere ii) werden in der Regel in 0,5 - 70 Gew.-%, bevorzugt 10 bis 65, besonders bevorzugt 20 -60 Gew.-% - bezogen auf das Gesamtgewicht der Komponenten i bis iv - eingesetzt.

Die Monomeren iii) können sein Vinylaromaten, C₁-C₇-Alkyl(meth)acrylate, ethylenisch ungesättigte Acetophenon- oder Benzophenonderivate, C₁-C₇ Vinylesters, C₁-C₇ Vinylether, ethylenisch ungesättigte Nitrile, ethylenisch ungesättigte Amide, Vinylhalogenide, C₂-C₇ Olefine, cyclische Lactame oder Mischungen dieser Monomeren.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Als C₁-C₇-Alkyl(meth)acrylate sind beispielsweise Methylmethacrylat, Methylacrylat, n-Butylacrylat, Ethylacrylat und 2-Ethylhexylacrylat zu nennen. Insbesondere sind auch Mischungen der (Meth)acrylsäurealkylester geeignet. Unter C₁-C₇-Alkyl(meth)acrylaten sind weiterhin Hydroxylgruppen enthaltende Monomere wie insbesondere C₁-C₇-Hydroxyalkyl(meth)acrylate und Ureidogruppen enthaltende Monomere wie C₁-C₇-Ureido(meth)acrylate zu verstehen.

Unter ethylenisch ungesättigten Acetophenon- oder Benzophenonderivaten versteht man die in EP-A-346 734, EP-A-377199, DE-A-4 037 079 und DE-A-3 844 444 beschriebenen Fotoinitiatoren. Bei der ethylenisch ungesättigten Gruppe handelt es sich vorzugsweise um eine Acryl- oder Methacrylgruppe.

Vinylester von Carbonsäuren mit 1 bis 7 C-Atomen sind z.B., Vinylacetat, Vinylpropionat und Vinylbutyrat.

Als Vinylether kommen z.B. Vinylmethylether oder Vinylisobutylether in Frage.

Beispiele für ethylenisch ungesättigte Nitrile sind Acrylnitril und Methacrylnitril, für ethylenisch ungesättigte Amide Acrylamid oder (Meth)acrylamid.

Die Vinylhalogenide sind mit Chlor, Fluor oder Brom substituierte ethylenisch ungesättigte Verbindungen, bevorzugt Vinylchlorid und Vinylidenchlorid.

Unter C₂-C₇ Olefine sind Kohlenwasserstoffe mit 2 bis 7 C-Atomen und ein oder zwei olefinischen Doppelbindungen wie beispielsweise Butadien, Isopren und Chloropren, Ethylen oder Propylen zu verstehen.

Als cyclische Lactame kommen beispielsweise N-Vinylpyrrolidon oder N-Vinylcaprolactam in Betracht.

Monomere iv) tragen Carbonsäure- Sulfonsäure- oder Phosphonsäuregruppen oder deren Salze. Genannt seien z.B. Acrylsäure, Methacrylsäure, Itaconsäure, Maleinsäure oder Fumarsäure , Vinylphosphonsäure und 2-Acrylamido- 2- methylpropansulfonsäure. Bevorzugt ist Acrylsäure.

Die Herstellung der Copolymeren durch radikalische Lösungspolymerisation und anschließende Destillation ist in EP 655465 beschrieben. Die Molmassen (bestimmt durch GPC in THF mit Polystyrol.als Standard) betragen in der Regel Mn 1000-100 000 bzw. Mw 2000 - 200 000, besonders bevorzugt sind Molekulargewichte Mn 1000 - 10 000 und Mw 2000 - 20 000.

Vorzugsweise werden die Molmasse und der Gehalt an Monomer ii) so gewählt, dass im Mittel mindestens eine zur Reaktion mit den Mischungspartnern der Polymermischung befähigte Gruppe pro Kette vorliegt, ganz bevorzugt sind es zwei oder mehr.

Bei der Einarbeitung in das Polymermischung kann es vorteilhaft sein, wenn das Copolymer bei 23° eine Nullviskosität von < 100Pas aufweist.

Die Copolymere können in Lösung, als Dispersion oder Emulsion, als Feststoff oder Flüssigkeit, besonders bevorzugt als niederviskose Schmelze zum Einsatz kommen.

Die erfindungsgemäßen Copolymere können zur Herstellung von Papier, Pappe und Karton benutzt werden. Besonders eignen sie sich zur Unterstützung der Papierleimung, wie sie in WO 2004 037867 beschrieben ist. Kombinationen der erfindungsgemäßen Polymeren mit Stärke tragen zu einer verbesserten Leimung bei. Sie können unter Mitverwendung der Monomere iv auch in Wasser dispergierbar sein oder als 100% Systeme der Stärke zugesetzt werden.

Sie können auch zur Verbesserung der Nassfestigkeit von Papier verwendet werden.

Klebstoffe für die Folienkaschierung (technische Kaschierungen, Verbundfolien- und Glanzfolienkaschierungen) müssen gut auf unpolaren Oberflächen haften. In diesen Anwendungen, beschrieben in WO2004058834, sind die erfindungsgemäßen Polymere geeignet, das Auffließen der Klebstoffe auf die Oberflächen von Kunststofffolien zu fördern. Besonders bei der Verwendung von Polyethylen- oder Polypropylenfolien. Erfindungsgemäße Polymere mit Anteilen von Monomeren iv) lassen sich in Wasser dispergieren und so auch in wässrigen Klebstoffen einsetzen.

Die Copolymere eignen sich auch zur Hydrophobierung von Textilfasern. Sie können 100%ig, in Lösungsmitteln oder Wasser aufgebracht werden (EP-A 1751345). Bei der Lederzurichtung können sie als Hydrophobiermittel eingesetzt werden (W0199804748).
Als Primer auf Holz verhindern sie Migrationen niedermolekularer Bestandteile des Holzes an die Oberfläche und umgekehrt das Wegschlagen von Beschichtungsstoffen in das Holz.
Sie können zur Verbesserung der Verträglichkeit von Bindemitteln und Polysachariden bei der Faserbindung eingesetzt werden, wie in EP-A 911361 beschrieben.

Die erfindungsgemäßen Copolymere lassen sich beispielsweise im Extruder als Zusatz in Polymermischungen einarbeiten. Die erfindungsgemäßen Copolymere eignen sich insbesondere als Kettenverlängerer, Verträglichkeitsvermittler und/oder Hydrolysestabilisatoren in Polymeren - insbesondere biologisch abbaubaren Polymeren und Polymermischungen. Die Copolymere wirken dem thermischen Abbau der Polymere entgegen. Unter Polymeren werden insbesondere Kondensationspolymere wie beispielsweise Polyester, Polyamide, Polycarbonate, Polyurethane und Polysulfone verstanden.

Insbesondere eignen sich die erfindungsgemäßen Copolymere wie eingangs erwähnt als Zusatz in Stärke-haltigen Polymeren. Stärke-haltigen Polymere können hergestellt werden durch Extrusion von Polyester, Stärke (nicht thermoplastifiziert oder thermoplastifiziert), Copolymer und gegebenenfalls Weichmacher wie beispielsweise Glycerin oder Sorbit, die zur Plastifizierung der Stärke eingesetzt werden.
Stärke, nicht plastifiziert und insbesondere plastifiziert, ist ein interessanter Füllstoff in biologisch abbaubaren Polymeren wie Polymilchsäure, Polyhydroxyalkanoat, Polycarbonat, Polycaprolacton und biologisch abbaubare aliphatische und aliphatisch/aromaztische Polyester. Stärke ist in der Regel Maisstärke oder Kartoffelstärke.

Als biologisch abbaubaren Polyester ist beispielsweise Polymilchsäure geeignet. Polymilchsäure mit dem folgenden Eigenschaftsprofil wird bevorzugt eingesetzt:
● einer Schmelzvolumenrate (MVR bei 190°C und 2.16 kg nach ISO 1133 von 0.5 - vorzugsweise 2 - bis 30 und insbesondere bis 9 ml/10 Minuten
● einem Schmelzpunkt unter 240°C;
● einem Glaspunkt (Tg) größer 55°C
● einem Wassergehalt von kleiner 1000 ppm
● einem Monomeren-Restgehalt (L-Lactid) von kleiner 0.3 %.
● einem Molekulargewicht von größer 80 000 Dalton.

### Bevorzugte Polymilchsäuren sind beispielsweise NatureWorks® 020 oder 4042D (Polylmilchsäure der Fa. NatureWorks):

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten umfasst. Poly-4-hydroxybutyrate sind insbesondere von der Fa. Metabolix bekannt. Sie werden unter dem Handelsnamen Mirel® vertrieben. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht M_{w} von 100.000 bis 1.000.000 und vorzugsweise von 300.000 bis 600.000 auf.

Unter teilaromatischen Polyestern auf Basis von aliphatischen Diolen und aliphatisch/aromatischen Dicarbonsäuren werden auch Polyesterderivate verstanden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie EP 08165372.7). Insbesondere sind unter teilaromatischen Polyestern Produkte wie Ecoflex^{®} (BASF SE), Eastar^{®} Bio und Origo-Bi^{®} (Novamont) zu verstehen.

Polyesters auf Basis von aliphatischen Diolen und aliphatischen Dicarbonsäuren wie Polybutylensuccinat (PBS), Polybutylensuccinat-adipat (PBSA), Polybutylensuccinatsebacat (PBSSe) werden beispielsweise von der Fa. Showa Highpolymers unter dem Namen Bionolle^{®}vertrieben. Für neuere Entwicklungen siehe bspw. EP 08165370.1.

Polycaprolacton wird von der Fa. Daicel unter dem Produktnamen Placcel^{®} vermarktet.

Unter aliphatischen Polycarbonaten werden insbesondere Polyethylencarbonat und Polypropylencarbonat verstanden.

### Messmethoden

Der K-Wert nach Fikentscher wurde in THF bei 21°C einer 1 %igen Lösung bestimmt.

Das Molekulargewicht wurde mittels GPC gegen Polystyrolstandards in THF mit 0,1 % Trifluoressigsäure gemessen.

### Beispiel 1

In einer Polymerisationsapparatur bestehend aus Glasreaktor, Rückflusskühler, Rührer und Stickstoffeinlass wurden in leichtem Stickstoffstrom 791 g o-Xylol vorgelegt und auf 140°C erwärmt. Es wurden 50g einer Monomeren Mischung bestehend aus 40 % 2-Ethylhexylacrylat, 40 % Laurylacrylat und 20 % Glycidylmethacrylat zugegeben. Nach Wiedererreichen von 140°C wurden 20 g einer Starterlösung aus 20 g tert.-Butyl-peroctoat und 180 g o-Xylol zugegeben und 10 min anpolymerisiert, Dann wurden 950 g Monomerenmischung in 3 h und 180 g Starterlösung in 3 h. zugefahren. Anschließend wurde eine Lösung von 1 g tert.Butyl-peroctoat in 50 g o-Xylol in 5 min zugegeben und 45 min auspolymerisiert. Dann wurde das Lösungsmittel unter Vakuum entfernt und noch 1 h bei 140°C und <100 mbar entgast.
Feststoffgehalt: 98,8 % K-Wert (1 % in THF): 11,4
Molekulargewicht: Mn 3000; Mw 5400

### Beispiel 2

In einer Polymerisationsapparatur bestehend aus Glasreaktor, Rückflusskühler, Rührer und Stickstoffeinlass wurden in leichtem Stickstoffstrom 596 g o-Xylol vorgelegt und auf 140°C erwärmt. Es wurde 37,7 g einer Monomeren Mischung bestehend aus 10 % 2-Ethylhexylacrylat, 70 % Laurylacrylat und 20 % Glycidylmethacrylat zugegeben. Nach Wiedererreichen von 140°C wurden 15 g einer Starterlösung aus 15 g tert.Butyl-peroctoat und 135,7 g o-Xylol zugegeben und 10 min anpolymerisiert, Dann wurden 716 g Monomerenmischung in 3 h und 135,7 g Starterlösung in 3 h zugefahren. Anschließend wurde eine Lösung von 0,75 g tert. Butyl-peroctoat in 37,7 g o-Xylol in 5 min zugegeben und 45 min auspolymerisiert. Dann wurde das Lösungsmittel unter Vakuum entfernt und noch 1 h bei 140°C und <100 mbar entgast.
Feststoffgehalt: 98,2 % K-Wert (1 % in THF): 12
Molekulargewicht: Mn 3000; Mw 5700

### Beispiel 3

In einer Polymerisationsapparatur bestehend aus Glasreaktor, Rückflusskühler, Rührer und Stickstoffeinlass wurden in leichtem Stickstoffstrom 716 g o-Xylol vorgelegt und auf 140°C erwärmt. Es wurde 53,7 g einer Monomeren Mischung bestehend aus 730 g Laurylacrylat, 200 g Glycidylmethacrylat und 70 g Maleinsäureanhydrid gelöst in 75 g o-Xylol zugegeben. Nach Wiedererreichen von 140°C wurden 20 g einer Starterlösung aus 20 g tert.Butyl-peroctoat und 200 g o-Xylol zugegeben und 10 min anpolymerisiert. Dann wurden 1021 g Monomerenmischung in 3 h und 180 g Starterlösung in 3 h zugefahren. Anschließend wurde eine Lösung von 1 g tert. Butyl-peroctoat in 50 g o-Xylol in 5 min zugegeben und 45 min auspolymerisiert. Dann wird das Lösungsmittel unter Vakuum entfernt und noch 1 h bei 140°C und <100 mbar entgast.
Feststoffgehalt: 98,0 % K-Wert (1 % in THF): 12,9
Molekulargewicht: Mn 3000; Mw 6800

### Beispiel 4

In einer Polymerisationsapparatur bestehend aus Glasreaktor, Rückflusskühler, Rührer und Stickstoffeinlass wurden in leichtem Stickstoffstrom 791 o-Xylol vorgelegt und auf 140°C erwärmt. Es wurde 50 g einer Monomeren Mischung bestehend aus 50 % Laurylacrylat und 50 % Glycidylmethacrylat zugegeben. Nach Wiedererreichen von 140°C wurden 20 g einer Starterlösung aus 20 g tert.Butyl-peroctoat und 180 g o-Xylol zugegeben und 10 min anpolymerisiert. Dann wurden 950 g Monomerenmischung in 3 h und 180 g Starterlösung in 3 h zugefahren. Anschließend wurde eine Lösung von 1 g tert.Butyl-peroctoat in 50 g o-Xylol in 5 min zugegeben und 45 min auspolymerisiert. Dann wurde das Lösungsmittel unter Vakuum entfernt und noch 1 h bei 140°C und
<100 mbar entgast.
Feststoffgehalt: 98,1 % K-Wert (1 % in THF): 13,9

### Beispiel 5

In einer Polymerisationsapparatur bestehend aus Glasreaktor, Rückflusskühler, Rührer und Stickstoffeinlass wurden in leichtem Stickstoffstrom 791 g o-Xylol vorgelegt und auf 140°C erwärmt. Es wurde 50 g einer Monomeren Mischung bestehend aus 40 % 2-Ethylhexylacrylat, 30 % Laurylacrylat, 20 % Glycidylmethacrylat und 10 % Sojaöl zugegeben. Nach Wiedererreichen von 140°C wurden 20 g einer Starterlösung aus 20 g tert.-Butyl-peroctoat und 180 g o-Xylol zugegeben und 10 min anpolymerisiert. Dann wurden 950 g Monomerenmischung in 3 h und 180 g Starterlösung in 3 h zugefahren. Anschließend wurde eine Lösung von 1 g tert.Butyl-peroctoat in 50 g o-Xylol in 5 min zugegeben und 45 min auspolymerisiert. Dann wurde das Lösungsmittel unter Vakuum entfernt und noch 1 h bei 140°C und <100 mbar entgast.

### Anwendungsbeispiele

### Herstellung von Stärke-haltigen Polymermischungen

In einem Zweischneckenextruder (ZSK25) wurde in den in Tabelle 1 angegebenen Mengenverhältnissen Polyester (Ecoflex FBX 7011), erfindungsgemäßes Copolymer, Stärke (Perfectamyl D6), Glycerin und Wasser bei 180°C einkonfektioniert und im Wasserbad granuliert. Die Drehzahl der Schnecke betrug 250 rpm und der Durchsatz 5 kg/h. Das Granulat wurde durch Pressen bei 160°C zu Folien mit einer Foliendicke von 200 µm verarbeitet.

### Mechanische Prüfungen

Aus den Folien wurde Prüfkörper (Zugstab) ausgestanzt und mechanische Prüfung nach ISO 527-3 durchgeführt.

**Tabelle 1: Mechanische Eigenschaften der erfindungsgemäßen Polymermischungen B1 bis B10 und der Vergleichsmischungen V1 und V2**

| | B1 | B2 | B4 | B5 | B6 | B7 | B8 | B9 | B 10 | B 11 | B 12 | V1 | V2 |
|---|---|---|---|---|---|---|---|---|---|---|---|---|---|
| Stärke (Perfectamyl D6) [Gew.-%] | 33 | 33 | 33 | 33 | 33 | 33 | 33 | 33 | 33 | 33 | 33 | 33 | 33 |
| Ecoflex FBX 7011 [Gew.-%] | 55 | 55 | 55 | 55 | 55 | 55 | 55 | 55 | 41 | 41 | 41 | 55 | 55 |
| PLA (Naturework 4042) [Gew.-%] | | | | | | | | | 14 | 14 | 14 | | |
| Glycerin [Gew.-%] | 6 | 6 | 6 | 6 | 6 | 6 | 6 | 6 | 6 | 6 | 6 | 6 | 6 |
| Wasser [Gew.-%] | 6 | 6 | 6 | 6 | 6 | 6 | 6 | 6 | 6 | 6 | 6 | 6 | 6 |
| Bsp. 1 [Gew.-%*] | 0,5 | 0,2 | | | | | | | 0,5 | | | | |
| Bsp. 2 [Gew.-%*] | | | 0,2 | 0,5 | | | | | | 0,5 | | | |
| Bsp. 4 [Gew.-%*] | | | | | 0,2 | 0,5 | | | | | 0,5 | | |
| Bsp. 5 [Gew.-%*] | | | | | | | 0,2 | 0,5 | | | | | |
| Joncryl ADR 4368 | | | | | | | | | | | | 0,5 | |
| | | | | | | | | | | | | | |
| Reißfestigkeit (MPa) | 35 | 27 | 25 | 30 | 28 | 38 | 26 | 32 | 34 | 33 | 39 | 26 | 22 |
| Reißdehnung (%) | 750 | 690 | 660 | 690 | 700 | 790 | 680 | 755 | 760 | 743 | 733 | 674 | 515 |
| E-Modul (MPa) | 110 | 112 | 107 | 109 | 115 | 119 | 110 | 115 | 250 | 243 | 264 | 120 | 112 |

| | | | | | | | | | | | | | |
|---|---|---|---|---|---|---|---|---|---|---|---|---|---|
| Gew.-%* = Gew.-% bezogen auf die Polymermischung | | | | | | | | | | | | | |

Die in Tabelle 1 gezeigten Ergebnisse zeigen eindrucksvoll, dass die erfindungsgemäßen Polymermischungen eine deutlich höhere Reißfestigkeit und Reißdehnug aufweisen als die Vergleichsmischung V1 mit 0,5 Gew.-%, bezogen auf die Polymermischung, des bekannten Joncryl® ADR 4368 und als V2 (ohne Zusatz eines Copolymers).

## Patentansprüche

1. Polymermischung, enthaltend 0,05 bis 20 Gew.-% eines Copolymers erhältlich durch radikalische Polymerisation von
i) 10 bis 90 Gew.-%, bezogen auf das Gesamtgewicht der Komponenten i bis iv, mindestens eines Monomers ausgewählt aus der Gruppe bestehend aus einem C₈-C₃₀-Alkyl(meth)acrylat, C₈-C₃₀ Vinylester, C₈-C₃₀ Vinylether, C₈-C₃₀ Olefin und Triglycerid aus ungesättigten C₈-C₃₀ Carbonsäuren;
ii) 0,5 bis 70 Gew.-%, bezogen auf das Gesamtgewicht der Komponenten i bis iv, eines doppelbindungshaltigen Monomers mit mindestens einer Epoxid-, Isocyanat-, Carbodiimid-, Silan-, ß-Dicarbonyl-, Oxazolin-, oder Anhydridgruppe;
iii) 0 bis 75 Gew.-%, bezogen auf das Gesamtgewicht der Komponenten i bis iv, eines oder mehrerer Monomere ausgewählt aus der Gruppe bestehend aus Vinylaromat, C₁-C₇-Alkyl(meth)acrylat, ethylenisch ungesättigte Acetophenon- oder Benzophenonderivat, C₁-C₇ Vinylester, C₁-C₇ Vinylether, ethylenisch ungesättigtes Nitril, ethylenisch ungesättigtes Amid, Vinylhalogenid, C₂-C₇ Olefin, cyclisches Laktam und Mischungen dieser Monomeren und
iv) 0 bis 10 Gew.-%, bezogen auf das Gesamtgewicht der Komponenten i bis iv, eines radikalisch polymerisierbaren Monomers mit Carbonsäure, Sulfonsäure oder Phosphonsäuregruppen oder dessen Salze;
thermoplastifizierte oder nichtthermoplastifizierte Stärke und gegebenenfalls weitere Polymere.

2. Polymermischung nach Anspruch 1, wobei das Copolymer erhältlich ist durch radikalische Polymerisation von
i) 10 bis 90 Gew.-%, bezogen auf das Gesamtgewicht der Komponenten i bis iii, mindestens eines C₈-C₃₀ Alkyl(meth)acrylates, C₈-C₃₀ Vinylesters oder C₈-C₃₀Vinylethers;
ii) 0,5 bis 60 Gew.-%, bezogen auf das Gesamtgewicht der Komponenten i bis iv, eines reaktiven Monomers ausgewählt aus der Gruppe bestehend aus Glycidylacrylat, Glycidylmethacrylat, Maleinsäureanhydrid, Allylglycidylether, Glycidylethacrylat, Dimethyl-meta-isopropenyl-benzyl-isocyanate und Itaconsäureanhydrid;
iii) 0 bis 75 Gew.-%, bezogen auf das Gesamtgewicht der Komponenten i bis iv, eines Vinylaromaten, C₁-C₇-Alkyl(meth)acrylates oder Mischungen dieser Monomeren;
iv) 0 bis 10 Gew.-% eines radikalisch polymerisierbaren Monomers mit Carbonsäure, Sulfonsäure oder Phosphonsäuregruppen oder deren Salze.

3. Polymermischung nach Anspruch 1, wobei das Copolymer erhältlich ist durch radikalische Polymerisation von
i) 30 bis 90 Gew.-%, bezogen auf das Gesamtgewicht der Komponenten i bis iii, mindestens eines C₈-C₃₀ Alkyl(meth)acrylates, C₈-C₃₀Vinylesters oder C₈-C₃₀Vinylethers;
ii) 0,5 bis 30 Gew.-%, bezogen auf das Gesamtgewicht der Komponenten i bis iii, eines reaktiven Monomers ausgewählt aus der Gruppe bestehend aus Glycidylacrylat, Glycidylmethacrylat und Maleinsäureanhydrid; und
iii) 0 bis 25 Gew.-%, bezogen auf das Gesamtgewicht der Komponenten i bis iii, eines Styrols oder C₁-C₆ Alkyl(meth)acrylates.

4. Polymermischung nach Anspruch 1, wobei das Copolymer erhältlich ist durch radikalische Polymerisation von
i) 10 bis 80 Gew.-%, bezogen auf das Gesamtgewicht der Komponenten i bis iii, mindestens eines C₈-C₃₀Alkyl(meth)acrylates, C₈-C₃₀Vinylesters oder C₈-C₃₀ Vinylethers;
ii) 10 bis 60 Gew.-%, bezogen auf das Gesamtgewicht der Komponenten i bis iii, eines reaktiven Monomers ausgewählt aus der Gruppe bestehend aus Glycidylacrylat, Glycidylmethacrylat und Maleinsäureanhydrid; und
iii) 0 bis 25 Gew.-%, bezogen auf das Gesamtgewicht der Komponenten i bis iii, eines Styrols, oder C₁-C₇ Alkyl(meth)acrylates .

5. Copolymere mit Molekulargewichten M_{w} von 2000 - 20.000 erhältlich durch radikalische Polymerisation von
i) 10 bis 80 Gew.-%, bezogen auf das Gesamtgewicht der Komponenten i bis iii, mindestens eines C₈-C₃₀Alkyl(meth)acrylates, C₈-C₃₀Vinylesters oder C₈-C₃₀ Vinylethers;
ii) 10 bis 60 Gew.-%, bezogen auf das Gesamtgewicht der Komponenten i bis iii, eines reaktiven Monomers ausgewählt aus der Gruppe bestehend aus Glycidylacrylat, Glycidylmethacrylat und Maleinsäureanhydrid; und
iii) 0 bis 25 Gew.-%, bezogen auf das Gesamtgewicht der Komponenten i bis iii, eines Styrols, oder C₁-C₇ Alkyl(meth)acrylates.

6. Polymermischung nach den Ansprüchen 1-4, wobei weitere Polymere eines oder mehrere Polymere bedeutet ausgewählt aus der Gruppe bestehend aus Polymilchsäure, Polyhydroxyalkanoat, Polycaprolacton, biologisch abbaubare aliphatische und aliphatisch/aromatische Polyester.

7. Polymermischung, enthaltend
0,1 bis 5 Gew.-% Copolymergemäß Anspruch 5 und 99,9 bis 95 Gew.-% eines oder mehrerer Polykondensate ausgewählt aus der Gruppe bestehend aus Polyamid, Polyester, Polycarbonat und Polyurethan.

8. Verwendung der Copolymere gemäß Anspruch 5 als Kettenverlängerer von Polymeren bzw. Polymermischungen.

9. Verwendung der Copolymere gemäß Anspruch 5 als Verträglichkeitsvermittler in Polymermischungen.

10. Verwendung der Copolymere gemäß Anspruch 5 als Hydrolysestabilisator in Polymermischungen.

11. Verwendung der Copolymere erhältlich durch radikalische Polymerisation von
i) 10 bis 90 Gew.-%, bezogen auf das Gesamtgewicht der Komponenten i bis iv, mindestens eines Monomers ausgewählt aus der Gruppe bestehend aus einem C₈-C₃₀-Alkyl(meth)acrylat, C₈-C₃₀ Vinylester, C₈-C₃₀ Vinylether, C₈-C₃₀ Olefin und Triglycerid aus ungesättigten C₈-C₃₀ Carbonsäuren;
ii) 0,5 bis 70 Gew.-%, bezogen auf das Gesamtgewicht der Komponenten i bis iv, eines doppelbindungshaltigen Monomers mit mindestens einer Epoxid-, Isocyanat-, Carbodiimid-, Silan-, ß-Dicarbonyl-, Oxazolin-, oder Anhydridgruppe;
iii) 0 bis 75 Gew.-%, bezogen auf das Gesamtgewicht der Komponenten i bis iv, eines oder mehrerer Monomere ausgewählt aus der Gruppe bestehend aus Vinylaromat, C₁-C₇-Alkyl(meth)acrylat, ethylenisch ungesättigte Acetophenon- oder Benzophenonderivat, C₁-C₇ Vinylester, C₁-C₇ Vinylether, ethylenisch ungesättigtes Nitril, ethylenisch ungesättigtes Amid, Vinylhalogenid, C₂-C₇ Olefin, cyclisches Laktam und Mischungen dieser Monomeren und
iv) 0 bis 10 Gew.-%, bezogen auf das Gesamtgewicht der Komponenten i bis iv, eines radikalisch polymerisierbaren Monomers mit Carbonsäure, Sulfonsäure oder Phosphonsäuregruppen oder dessen Salze
zur Herstellung von Papier und Karton.

12. Verwendung der Copolymere erhältlich durch radikalische Polymerisation von
i) 10 bis 90 Gew.-%, bezogen auf das Gesamtgewicht der Komponenten i bis iv, mindestens eines Monomers ausgewählt aus der Gruppe bestehend aus einem C₈-C₃₀-Alkyl(meth)acrylat, C₈-C₃₀ Vinylester, C₈-C₃₀ Vinylether, C₈-C₃₀ Olefin und Triglycerid aus ungesättigten C₈-C₃₀ Carbonsäuren;
ii) 0,5 bis 70 Gew.-%, bezogen auf das Gesamtgewicht der Komponenten i bis iv, eines doppelbindungshaltigen Monomers mit mindestens einer Epoxid-, Isocyanat-, Carbodiimid-, Silan-, ß-Dicarbonyl-, Oxazolin-, oder Anhydridgruppe;
iii) 0 bis 75 Gew.-%, bezogen auf das Gesamtgewicht der Komponenten i bis iv, eines oder mehrerer Monomere ausgewählt aus der Gruppe bestehend aus Vinylaromat, C₁-C₇-Alkyl(meth)acrylat, ethylenisch ungesättigte Acetophenon- oder Benzophenonderivat, C₁-C₇ Vinylester, C₁-C₇ Vinylether, ethylenisch ungesättigtes Nitril, ethylenisch ungesättigtes Amid, Vinylhalogenid, C₂-C₇ Olefin, cyclisches Laktam und Mischungen dieser Monomeren und
iv) 0 bis 10 Gew.-%, bezogen auf das Gesamtgewicht der Komponenten i bis iv, eines radikalisch polymerisierbaren Monomers mit Carbonsäure, Sulfonsäure oder Phosphonsäuregruppen oder dessen Salze
zur Oberflächenveredlung in der Papier-, Textil- und Lederindustrie.

## Claims

1. A polymer mixture comprising 0.05 to 20% by weight of a copolymer obtainable by free-radical polymerization of
i) 10% to 90% by weight, based on the total weight of components i to iv, of at least one monomer selected from the group consisting of a C₈-C₃₀ alkyl (meth)acrylate, C₈-C₃₀ vinyl ester, C₈-C₃₀ vinyl ether, C₈-C₃₀ olefin, and triglyceride of unsaturated C₈-C₃₀ carboxylic acids;
ii) 0.5% to 70% by weight, based on the total weight of components i to iv, of a double-bond-containing monomer having at least one epoxide, isocyanate, carbodiimide, silane, ß-dicarbonyl, oxazoline, or anhydride group;
iii) 0% to 75% by weight, based on the total weright of components i to iv, of one or more monomers selected from the group consisting of vinylaromatic, C₁-C₇-alkyl (meth)acrylate, ethylenically unsaturated acetophenone derivative or benzophenone derivative, C₁-C₇ vinyl ester, C₁-C₇ vinyl ether, ethylenically unsaturated nitrile, ethylenically unsaturated amide, vinyl halide, C₂-C₇ olefin, cyclic lactam, and mixtures of these monomers; and
iv) 0% to 10% by weight, based on the total weight of components i to iv, of a free-radically polymerizable monomer with carboxylic acid, sulfonic acid or phosphonic acid groups or salts thereof;
thermoplasticized or nonthermoplasticized starch, and,optionally, further polymers.

2. The polymer mixture according to claim 1, wherein the copolymer is obtainable by free-radical polymerization of
i) 10% to 90% by weight, based on the total weight of components i to iii, of at least one C₈-C₃₀ alkyl (meth)acrylate, C₈-C₃₀ vinyl ester or C₈-C₃₀ vinyl ether;
ii) 0.5% to 60% by weight, based on the total weight of components i to iv, of a reactive monomer selected from the group consisting of glycidyl acrylate, glycidyl methacrylate, maleic anhydride, allyl glycidyl ether, glycidyl ethacrylate, dimethyl-meta-isopropenyl-benzyl isocyanate, and itaconic anhydride;
iii) 0% to 75% by weight, based on the total weight of components i to iv, of a vinylaromatic, C₁-C₇-alkyl (meth)acrylate or mixtures of these monomers;
iv) 0% to 10% by weight of a free-radically polymerizable monomer with carboxylic acid, sulfonic acid or phosphonic acid groups or salts thereof.

3. The polymer mixture according to claim 1, wherein the copolymer is obtainable by free-radical polymerization of
i) 30% to 90% by weight, based on the total weight of components i to iii, of at least one C₈-C₃₀ alkyl (meth)acrylate, C₈-C₃₀ vinyl ester or C₈-C₃₀ vinyl ether;
ii) 0.5% to 30% by weight, based on the total weight of components i to iii, of a reactive monomer selected from the group consisting of glycidyl acrylate, glycidyl methacrylate, and maleic anhydride; and
iii) 0% to 25% by weight, based on the total weight of components i to iii, of a styrene or C₁-C₆ alkyl (meth)acrylate.

4. The polymer mixture according to claim 1, wherein the copolymer is obtainable by free-radical polymerization of
i) 10% to 80% by weight, based on the total weight of components i to iii, of at least one C₈-C₃₀ alkyl (meth)acrylate, C₈-C₃₀ vinyl ester or C₈-C₃₀ vinyl ether;
ii) 10% to 60% by weight, based on the total weight of components i to iii, of a reactive monomer selected from the group consisting of glycidyl acrylate, glycidyl methacrylate, and maleic anhydride; and
iii) 0% to 25% by weight, based on the total weight of components i to iii, of a styrene or C₁-C₇ alkyl (meth)acrylate.

5. A copolymer having molecular weights Mw of 2000 - 20 000, obtainable by free-radical polymerization of
i) 10% to 80% by weight, based on the total weight of components i to iii, of at least one C₈-C₃₀alkyl (meth)acrylate, C₈-C₃₀ vinyl ester or C₈-C₃₀ vinyl ether;
ii) 10% to 60% by weight, based on the total weight of components i to iii, of a reactive monomer selected from the group consisting of glycidyl acrylate, glycidyl methacrylate, and maleic anhydride; and
iii) 0% to 25% by weight, based on the total weight of components i to iii, of a styrene or C₁-C₇ alkyl (meth)acrylate.

6. The polymer mixture according to any of claims 1 - 4, further polymers denoting one or more polymers selected from the group consisting of polylactic acid, polyhydroxyalkanoate, polycaprolactone, and biodegradable aliphatic and aliphatic/aromatic polyester.

7. A polymer mixture comprising
0.1 % to 5% by weight of a copolymer according to claim 5 and
99.9% to 95% by weight of one or more polycondensates selected from the group consisting of polyamide, polyester, polycarbonate, and polyurethane.

8. Use of a copolymer according to claim 5 as a chain extender of polymers or polymer mixtures.

9. Use of a copolymer according to claim 5 as a compatibilizer in polymer mixtures.

10. Use of a copolymer according to claim 5 as a hydrolysis stabilizer in polymer mixtures.

11. Use of a copolymer obtainable by free-radical polymerization of
i) 10% to 90% by weight, based on the total weight of components i to iv, of at least one monomer selected from the group consisting of a C₈-C₃₀ alkyl (meth)acrylate, C₈-C₃₀ vinyl ester, C₈-C₃₀ vinyl ether, C₈-C₃₀ olefin, and triglyceride of unsaturated C₈-C₃₀ carboxylic acids;
ii) 0.5% to 70% by weight, based on the total weight of components i to iv, of a double-bond-containing monomer having at least one epoxide, isocyanate, carbodiimide, silane, ß-dicarbonyl, oxazoline, or anhydride group;
iii) 0% to 75% by weight, based on the total weright of components i to iv, of one or more monomers selected from the group consisting of vinylaromatic, C₁-C₇-alkyl (meth)acrylate, ethylenically unsaturated acetophenone derivative or benzophenone derivative, C₁-C₇ vinyl ester, C₁-C₇ vinyl ether, ethylenically unsaturated nitrile, ethylenically unsaturated amide, vinyl halide, C₂-C₇ olefin, cyclic lactam, and mixtures of these monomers; and
iv) 0% to 10% by weight, based on the total weight of components i to iv, of a free-radically polymerizable monomer with carboxylic acid, sulfonic acid or phosphonic acid groups or salts thereof;
to produce paper and cardboard.

12. Use of a copolymer obtainable by free-radical polymerization of
i) 10% to 90% by weight, based on the total weight of components i to iv, of at least one monomer selected from the group consisting of a C₈-C₃₀ alkyl (meth)acrylate, C₈-C₃₀ vinyl ester, C₈-C₃₀ vinyl ether, C₈-C₃₀ olefin, and triglyceride of unsaturated C₈-C₃₀ carboxylic acids;
ii) 0.5% to 70% by weight, based on the total weight of components i to iv, of a double-bond-containing monomer having at least one epoxide, isocyanate, carbodiimide, silane, ß-dicarbonyl, oxazoline, or anhydride group;
iii) 0% to 75% by weight, based on the total weright of components i to iv, of one or more monomers selected from the group consisting of vinylaromatic, C₁-C₇-alkyl (meth)acrylate, ethylenically unsaturated acetophenone derivative or benzophenone derivative, C₁-C₇ vinyl ester, C₁-C₇ vinyl ether, ethylenically unsaturated nitrile, ethylenically unsaturated amide, vinyl halide, C₂-C₇ olefin, cyclic lactam, and mixtures of these monomers; and
iv) 0% to 10% by weight, based on the total weight of components i to iv, of a free-radically polymerizable monomer with carboxylic acid, sulfonic acid or phosphonic acid groups or salts thereof;
for surface finishing in the paper, textile or leather industry.

## Revendications

1. Mélange de polymères, contenant 0,05 à 20 % en poids d'un copolymère pouvant être obtenu par polymérisation radicalaire de
i) 10 à 90 % en poids, par rapport au poids total des composants i à iv, d'au moins un monomère choisi dans le groupe constitué par un (méth)acrylate d'alkyle en C₈-C₃₀, un ester vinylique en C₈-C₃₀, éther vinylique en C₈-C₃₀, une oléfine en C₈-C₃₀ et un triglycéride d'acides carboxyliques en C₈-C₃₀ insaturés ;
ii) 0,5 à 70 % en poids, par rapport au poids total des composants i à iv, d'un monomère à double liaison comportant au moins un groupe époxy, isocyanate, carbodiimide, silane, β-dicarbonyle, oxazoline, ou anhydride ;
iii) 0 à 75 % en poids, par rapport au poids total des composants i à iv, d'un ou plusieurs monomères choisis dans le groupe constitué par un composé vinylaromatique, un (méth)acrylate d'alkyle en C₁-C₇, un dérivé d'acétophénone ou de benzophénone à insaturation éthylénique, un ester vinylique en C₁-C₇, un éther vinylique en C₁-C₇, un nitrile à insaturation éthylénique, un amide à insaturation éthylénique, un halogénure de vinyle, une oléfine en C₂-C₇, un lactame cyclique et des mélanges de ces monomères et
iv) 0 à 10 % en poids, par rapport au poids total des composants i à iv, d'un monomère polymérisable par voie radicalaire, comportant des groupes carboxy, sulfo ou phosphono ou leurs sels ;
des amidons thermoplastifiés ou non thermoplastifiés et éventuellement d'autres polymères.

2. Mélange de polymères selon la revendication 1, dans lequel le copolymère peut être obtenu par polymérisation radicalaire de
i) 10 à 90 % en poids, par rapport au poids total des composants i à iii, d'au moins un (méth)acrylate d'alkyle en C₈-C₃₀, ester vinylique en C₈-C₃₀ ou éther vinylique en C₈-C₃₀ ;
ii) 0,5 à 60 % en poids, par rapport au poids total des composants i à iv, d'un monomère réactif choisi dans le groupe constitué par l'acrylate de glycidyle, le méthacrylate de glycidyle, l'anhydride maléique, l'éther allylglycidylique, l'éthacrylate de glycidyle, des diméthyl-méta-isopropényl-benzyl-isocyanates et l'anhydride itaconique ;
iii) 0 à 75 % en poids, par rapport au poids total des composants i à iv, d'un composé vinylaromatique, de (méth)acrylates d'alkyle en C₁-C₇ ou de mélanges de ces monomères ;
iv) 0 à 10 % en poids d'un monomère polymérisable par voie radicalaire, comportant des groupes carboxy, sulfo ou phosphono ou leurs sels.

3. Mélange de polymères selon la revendication 1, dans lequel le copolymère peut être obtenu par polymérisation radicalaire de
i) 30 à 90 % en poids, par rapport au poids total des composants i à iii, d'au moins un (méth)acrylate d'alkyle en C₈-C₃₀, ester vinylique en C₈-C₃₀ ou éther vinylique en C₈-C₃₀ ;
ii) 0,5 à 30 % en poids, par rapport au poids total des composants i à iii, d'un monomère réactif choisi dans le groupe constitué par l'acrylate de glycidyle, le méthacrylate de glycidyle et l'anhydride maléique ; et
iii) 0 à 25 % en poids, par rapport au poids total des composants i à iii, d'un styrène ou (méth)acrylate d'alkyle en C₁-C₆.

4. Mélange de polymères selon la revendication 1, dans lequel le copolymère peut être obtenu par polymérisation radicalaire de
i) 10 à 80 % en poids, par rapport au poids total des composants i à iii, d'au moins un (méth)acrylate d'alkyle en C₈-C₃₀, ester vinylique en C₈-C₃₀ ou éther vinylique en C₈-C₃₀ ;
ii) 10 à 60 % en poids, par rapport au poids total des composants i à iii, d'un monomère réactif choisi dans le groupe constitué par l'acrylate de glycidyle, le méthacrylate de glycidyle et l'anhydride maléique ; et
iii) 0 à 25 % en poids, par rapport au poids total des composants i à iii, d'un styrène ou (méth)acrylate d'alkyle en C₁-C₇.

5. Copolymères ayant des masses moléculaires M_{w} de 2 000 - 20 000, pouvant être obtenus par polymérisation radicalaire de
i) 10 à 80 % en poids, par rapport au poids total des composants i à iii, d'au moins un (méth)acrylate d'alkyle en C₈-C₃₀, ester vinylique en C₈-C₃₀ ou éther vinylique en C₈-C₃₀ ;
ii) 10 à 60 % en poids, par rapport au poids total des composants i à iii, d'un monomère réactif choisi dans le groupe constitué par l'acrylate de glycidyle, le méthacrylate de glycidyle et l'anhydride maléique ; et
iii) 0 à 25 % en poids, par rapport au poids total des composants i à iii, d'un styrène ou (méth)acrylate d'alkyle en C₁-C₇.

6. Mélange de polymères selon les revendications 1-4, dans lequel l'expression autres polymères signifie un ou plusieurs polymères choisis dans le groupe constitué par le poly(acide lactique), un polyhydroxy-alcanoate, la polycaprolactone, des polyesters aliphatiques et aliphatiques/aromatiques biologiquement dégradables.

7. Mélange de polymères, contenant
0,1 à 5 % en poids de copolymères selon la revendication 5 et 99,9 à 95 % en poids d'un ou plusieurs produits de polycondensation choisis dans le groupe constitué par un polyamide, un polyester, un polycarbonate et un polyuréthane.

8. Utilisation des copolymères selon la revendication 5 en tant que prolongateur de chaîne de polymères ou mélanges de polymères.

9. Utilisation des copolymères selon la revendication 5 en tant qu'inducteur de compatibilité dans des mélanges de polymères.

10. Utilisation des copolymères selon la revendication 5 en tant que stabilisant vis-à-vis de l'hydrolyse dans des mélanges de polymères.

11. Utilisation des copolymères pouvant être pouvant être obtenus par polymérisation radicalaire de
i) 10 à 90 % en poids, par rapport au poids total des composants i à iv, d'au moins un monomère choisi dans le groupe constitué par un (méth)acrylate d'alkyle en C₈-C₃₀, un ester vinylique en C₈-C₃₀, un éther vinylique en C₈-C₃₀, une oléfine en C₈-C₃₀ et un triglycéride d'acides carboxyliques en C₈-C₃₀ insaturés ;
ii) 0,5 à 70 % en poids, par rapport au poids total des composants i à iv, d'un monomère à double liaison comportant au moins un groupe époxy, isocyanate, carbodiimide, silane, 5-dicarbonyle, oxazoline, ou anhydride ;
iii) 0 à 75 % en poids, par rapport au poids total des composants i à iv, d'un ou plusieurs monomères choisis dans le groupe constitué par un composé vinylaromatique, un (méth)acrylate d'alkyle en C₁-C₇, un dérivé d'acétophénone ou de benzophénone à insaturation éthylénique, un ester vinylique en C₁-C₇, un éther vinylique en C₁-C₇, un nitrile à insaturation éthylénique, un amide à insaturation éthylénique, un halogénure de vinyle, une oléfine en C₂-C₇, un lactame cyclique et des mélanges de ces monomères et
iv) 0 à 10 % en poids, par rapport au poids total des composants i à iv, d'un monomère polymérisable par voie radicalaire, comportant des groupes carboxy, sulfo ou phosphono ou leurs sels
dans la fabrication du papier et du carton.

12. Utilisation des copolymères pouvant être pouvant être obtenus par polymérisation radicalaire de
i) 10 à 90 % en poids, par rapport au poids total des composants i à iv, d'au moins un monomère choisi dans le groupe constitué par un (méth)acrylate d'alkyle en C₈-C₃₀, un ester vinylique en C₈-C₃₀, un éther vinylique en C₈-C₃₀, une oléfine en C₈-C₃₀ et un triglycéride d'acides carboxyliques en C₈-C₃₀ insaturés ;
ii) 0,5 à 70 % en poids, par rapport au poids total des composants i à iv, d'un monomère à double liaison comportant au moins un groupe époxy, isocyanate, carbodiimide, silane, β-dicarbonyle, oxazoline, ou anhydride ;
iii) 0 à 75 % en poids, par rapport au poids total des composants i à iv, d'un ou plusieurs monomères choisis dans le groupe constitué par un composé vinylaromatique, un (méth)acrylate d'alkyle en C₁-C₇, un dérivé d'acétophénone ou de benzophénone à insaturation éthylénique, un ester vinylique en C₁-C₇, un éther vinylique en C₁-C₇, un nitrile à insaturation éthylénique, un amide à insaturation éthylénique, un halogénure de vinyle, une oléfine en C₂-C₇, un lactame cyclique et des mélanges de ces monomères et
iv) 0 à 10 % en poids, par rapport au poids total des composants i à iv, d'un monomère polymérisable par voie radicalaire, comportant des groupes carboxy, sulfo ou phosphono ou leurs sels
pour le traitement de surface dans l'industrie du papier, des textiles et du cuir.
